# EUROPEAN PATENT APPLICATION

(11) **EP 2 672 672 A1**
(43) Date of publication of application: **11.12.2013**
(21) Application number: 12360044.7
(22) Date of filing: 07.06.2012
(51) Int. Cl.: H04L 29/06, G06F 21/00, G06F 12/14, G06F 9/455, H04L 9/00

(54) **Secure data processing**

(71) Applicant: Alcatel Lucent, 75007 Paris (FR)
(72) Inventor: Cucinotta, Tommaso, Dublin 15 (IE); Cherubini, Davide, Dublin 15 (IE); Jul, Eric B, 4000 Roskilde (DK)
(74) Representative: Script IP Limited

(57) **Abstract**

A secure data processing apparatus and method are disclosed. The secure data processing apparatus is operable to securely process user data provided by a user. The secure data processing apparatus comprises: a trusted domain (200) comprising a trusted bus coupled with a trusted data processing apparatus (220) operable to process incoming user data received over the trusted bus and to generate outgoing user data; a trusted domain controller (210) coupling the trusted bus with an untrusted bus of an untrusted domain, the trusted domain controller (210) being operable to ensure that encrypted incoming user data received over the untrusted bus is decrypted and provided over the trusted bus as the incoming user data and to ensure that outgoing user data is encrypted and provided over the untrusted bus as encrypted outgoing data; and a data store access controller (250) coupling the trusted domain controller (210) and the trusted data processing apparatus (220) with a memory bus (60) of a data store (240), the data store access controller (250) being operable to restrict successful requests to use the data store (240) received from the trusted domain controller (210) and the trusted data processing apparatus (220) to those addressed to a trusted region of the data store (240). By providing a data store access controller (250), it is possible to constrain memory that can be accessed by each device operable to generate access cycles to a data store (240), and a trusted domain (200) can be implemented within a general computing system. The constraint can be implemented by interposing a special component, referred to as an "address firewall" (250), or data store access controller (250), between each hardware element able to access the main RAM memory (240) and a memory bus (60).

## Description

### FIELD OF THE INVENTION

The present invention relates to a secure data processing apparatus and a method.

### BACKGROUND

The paradigm of cloud computing, in which computations and data are handed to remote computers, results in a need to provide better protection of confidential data. In many cloud computing applications, code sent to a remote computer in the cloud, data to be remotely processed, and data output from remote processing operations must remain confidential.

It will be appreciated that in transit to and from the remote computer, data and code can readily be encrypted. However, a user must trust the remote computer and its system administrators.

System administrators typically have access to data and code sent to remote computers. Furthermore, untrusted, potentially malicious, software may run on such remote systems and may gain access to data handled by remote systems.

Even if data and code is sent to a remote system in an encrypted format in most cases it must be decrypted otherwise it cannot be processed by a remote computer in the cloud.

Confidentiality of computations handed over to remote computers owned and administrated by others, such as cloud providers, is subject to leakage and potential loss of confidentiality.

Secure solutions to the problem of providing trusted remote computational sites must be technically valid yet also affordable from a practical and implementation viewpoint.

It is desired to provide a secure data processing apparatus.

### SUMMARY

Accordingly, a first aspect provides a secure data processing apparatus operable to securely process user data provided by a user, the secure data processing apparatus comprising: a trusted domain comprising a trusted bus coupled with a trusted data processing apparatus operable to process incoming user data received over the trusted bus and to generate outgoing user data; a trusted domain controller coupling the trusted bus with an untrusted bus of an untrusted domain, the trusted domain controller being operable to ensure that encrypted incoming user data received over the untrusted bus is decrypted and provided over the trusted bus as the incoming user data and to ensure that outgoing user data is encrypted and provided over the untrusted bus as encrypted outgoing data; and a data store access controller coupling the trusted domain controller and the trusted data processing apparatus with a memory bus of a data store, the data store access controller being operable to restrict successful requests to use the data store received from the trusted domain controller and the trusted data processing apparatus to those addressed to a trusted region of the data store.

The first aspect recognises that isolation between execution environments to provide a degree of trust in a computing system may traditionally be targeted by providing memory protection hardware mechanisms which allow an Operating System (OS) to isolate from a security viewpoint, execution environments of different users.

Such memory protection hardware mechanisms typically require a CPU to have a special mode of operation (the so-called Ring o) in which there are no restrictions applied to code to be run by the CPU. The Ring o mode of operation is used to set up and administrate isolated execution of each process and thus the software running in Ring o must be trusted. Unfortunately, in traditional Operating Systems, malicious attackers have succeeded in exploiting bugs in code to be run or executed in Ring o thus permitting an unprivileged process to gain access to the code or data associated with another process. As a result, a security policy of the system may be subverted. It will also be appreciated that a malicious system administrator can control the software to be executed in Ring o and thus can inject malicious software, thereby bypassing the security policy of the system.

In virtualized environments, such as those implemented in cloud computing infrastructures, traditional memory protection can be utilized to isolate execution of different virtual machines. A virtual machine monitor, also known as a hypervisor, is operable to embed code which exploits a special mode of operation of available processor(s) in order to perform system management actions. Attackers may exploit bugs in implementations of a hypervisor and hypercalls and break isolation properties in place across different virtual machines. The owner of virtualized environment infrastructure typically has administrator access privileges in relation to each physical node of that virtualized environment and thus may be able to access any data managed by the hosted virtual machines. Users of a cloud computing infrastructure are thus typically forced to trust the provider.

Cryptographic mechanisms, such as homomorphic encryption, try to ameliorate the risks to a user when utilizing a cloud computing environment, by allowing a cloud provider to perform computations on encrypted data without being able to decrypt or understand the encrypted data. Such homomorphic encryption techniques may be restricted in scope and allow only a limited set of operations on the encrypted data. Furthermore, such techniques are still in their infancy and their effectiveness and usability still needs to be demonstrated.

Alternative secure data processing techniques may make use of Trusted Platform Module (TPM) technology. Use of TPM may ensure that a remote system cannot have been tampered with, that is to say, that all software components involved in a boot chain have not been modified, but can provide no guarantee in relation to software bugs.

Further alternative techniques allowing for implementation of confidential computations within an untrusted environment associate a processor with a cryptographic Memory Management Unit (MMU). By associating a processor, cache and cryptographic memory unit, a secure processor results which is operable to process data in its own cache that is kept in an encrypted form within main memory. According to such an arrangement, the cryptographic memory unit encrypts and decrypts data passing to and from the cache of the secure processor. The real-time encryption/decryption capabilities of such a cryptographic MMU are significant since the implementation of encryption and decryption techniques executed by such an MMU are activated each time required data is found not to be within the cache and encrypted data is retrieved from within main memory.

Aspects described herein recognize that it is possible to implement mechanisms within a system to create a trusted domain of execution, referred to as a Firewalled Domain of Execution (FDE). Such an FDE includes computing and memory resources and provides a trusted domain within an "untrusted" physical machine. Each FDE typically has the capability to force encryption of any data that is output from within the FDE, thus ensuring confidentiality of any data flow exiting the FDE. Such a FDE may be realized as a System-on-Chip (SoC) solution contained within an expansion board to be plugged within expansion slots of existing computer architectures, such as a PCI board. Accordingly, a secure data processing apparatus is provided. The secure data processing apparatus may be operable to securely process data which is provided by a user. The secure data processing apparatus may comprise a trusted domain. The trusted domain may comprise a trusted bus which may be coupled with a trusted data processing apparatus. The trusted data processing apparatus may be able to process incoming user data received over the trusted bus and may generate outgoing user data. The secure data processing apparatus may also comprise a trusted domain controller. The trusted domain controller may couple the trusted bus with him and trusted bus of an untrusted domain. The trusted domain controller may ensure that the encrypted incoming user data received over the untrusted bus is decrypted. The trusted domain controller may provide the decrypted incoming user data as the incoming data over the trusted bus. The trusted domain controller may also ensure that outgoing user data is encrypted and provided over the untrusted bus as encrypted outgoing data.

By providing a trusted domain controller which couples the trusted bus with an untrusted bus and ensures that incoming user data is decrypted whilst outgoing user data is encrypted, encrypted data is only ever provided in the untrusted domain which reduces the chance of the data being compromised and ensures that only decrypted data is processed within the trusted domain which improves the performance of the processing within the trusted domain. By providing the trusted domain controller as the conduit between the trusted and untrusted domain, access to the unencrypted data within the trusted domain can be avoided. Accordingly, the confidentiality of the data can be assured without any associated processing performance shortfalls.

The first aspect further recognizes that by providing a data store access controller, it is possible to constrain memory that can be accessed by each device operable to generate access cycles to the main RAM memory, a firewalled domain of execution can be implemented within a general computing system. According to the first aspect, the constraint is realized by interposing a special component, referred to as an "address firewall", or data store access controller, between each hardware element able to access the main RAM memory and a memory bus.

As a result, firewalled domains of execution can be realized by plugging commercial off the shelf chips onto a special motherboard having the functionality described in more detail below. The commercial off the shelf elements, along with portions of the main RAM memory provided on a physical machine, are logically partitioned across firewalled domain of execution environments. An address firewall hardware mechanism is operable to guarantee proper isolation and confidentiality of data and computation steps occurring within a firewalled domain of execution.

In one embodiment, the data store access controller is operable to restrict successful requests to use the data store received from the trusted domain controller and the trusted data processing apparatus to those addressed to a trusted region or public region of the data store. Accordingly, a data store access controller is operable to intercept any attempt by a master within a computing system to access to a data store, for example, system RAM memory. If the memory access attempt is made by a master determined to be within a trusted domain, then access is allowed by the data store access controller only if the target memory address is determined to "belong" to the same trusted domain, or if it represents a public memory address. That access attempt may, of course, be routed via a trusted domain controller associated with the trusted domain. It will be understood that the data store access controller will not allow a data store access attempt by a master within a system if that attempt is to a memory address determined by the data store access controller to belong to any other trusted domain implemented within the system.

In one embodiment, the data store access controller provides a sole interface between the data store and the trusted domain controller and the trusted data processing apparatus. Accordingly, all data store access attempts are controlled by the data store access controller.

In one embodiment, the data store access controller comprises hardware operable to allow or deny access to addresses within the data store in accordance with programmed rules. By providing a subset of typical hypervisor functionality to be implemented in hardware, it will be appreciated that the vulnerability of the data store access controller is reduced. That is to say, by providing hardware which is hardcoded to perform logical acts, the vulnerability of the data store to unauthorised access attempts is reduced, since the likelihood of the hardware being susceptible to a software-based attack or bug is reduced.

In one embodiment, the secure data processing apparatus comprises a plurality of trusted domains and trusted domain controllers, the data store access controller being operable to couple each trusted domain controller and each trusted data processing apparatus with the memory bus of the data store, the data store access controller being operable to restrict successful requests to use the data store received from each trusted domain controller and each trusted data processing apparatus to those addressed to a trusted region of the data store associated with each trusted domain and trusted domain controller. It will be appreciated that it is possible to implement multiple trusted domains within the same physical system. Such a scenario may occur if, for example, a cloud provider wishes to provide a large number of independent trusted domains to customers. The data store access controller may thus be operable to implement rules which recognize the existence of a plurality of logical partitions of a data store, those logical partitions operating to provide a plurality of trusted or secure regions within the data store, each associated with a corresponding trusted domain, and a general public region of a data store, that region not having an association with any trusted domain.

In one embodiment, the data store access controller is reprogrammable to allow addresses within the data store to be allocated to a trusted region associated with a trusted domain, a public region, or a restricted region associated with at least one other trusted domain. Accordingly, whenever trusted domains within a system are enabled or disabled and associated memory space within a data store is dynamically reconfigured, it will be appreciated that the behavior of any data store access controller within a system must also be reconfigured. That reconfiguration of a data store access controller may occur synchronously with each trusted domain reconfiguration. That is to say, the data store access controller remains aware of whether a trusted is enabled or not and is aware of configured memory space associated with a trusted domain. In practice, the dynamic reconfiguration of trusted domain may not occur very frequently.

It will be appreciated that along with such reprogramming of a memory region of a data store access controller, the data store (memory) contents are forcibly cleared when configuration of trusted domains within a system are altered. Such reprogramming occurs in order to ensure that no data leakage occurs from a trusted environment to an untrusted public environment or to a different trusted environment.

This is a mechanism which assists in achieving confidential execution. The aim is to prevent a new trusted domain of execution being configured yet find in its assigned data store, for example, "shared" RAM, residual data associated with a previous trusted domain, or the same trusted domain under a prior configuration. It will thus be appreciated that each time trusted domains are reconfigured, either reconfiguring the cryptographic key within a trusted domain controller, or by changing the region of a data store memory region associated with that trusted domain, then the affected portions of the data store, for example, RAM memory, are forcibly cleared.

In one embodiment, the data store access controller is operable to support burst access cycles to the data store. Some system architectures support burst access cycles to the main data store, for example, RAM memory, in which multiple consecutive memory addresses are accessed without repeating the target address on the memory bus at every access. Such an access cycle is, for example, useful for cache memories and DMA controllers. In such scenarios a data store access controller may be operable to restrict access in respect of access requests comprising such multiple consecutive memory addresses without repeating the target address on the bus at every access in accordance with rules associated with a system data store in view of enabled trusted domains.

In one embodiment, the trusted domain controller provides a sole interface between said trusted domain and said untrusted domain. By providing the trusted domain controller as the only interface between the trusted and untrusted domain, encryption and decryption of data can be assured. In some embodiments, the trusted domain controller may provide the only physical access to the trusted domain.

In one embodiment, all data transfers between the trusted domain and the untrusted domain to and from a user occur through the trusted domain controller. Accordingly, appropriate encryption and decryption mandatorily occur.

In one embodiment, the data transfers between the trusted domain and the untrusted domain are forcibly encrypted and decrypted by the trusted domain controller.

In one embodiment, the trusted domain controller comprises non-reprogrammable cipher hardware operable to perform encryption and decryption on the data transfers between the trusted domain and the untrusted domain. Accordingly, the encryption and decryption processes may be hardwired into the trusted domain controller so that no software override or reprogramming of these functions is possible to avoid any malicious code overwriting the requirement for data leaving the trusted domain to be encrypted.

In one embodiment, the trusted domain controller is operable to perform encryption and decryption on data transfers between the trusted domain and the untrusted domain using respective non-reprogrammable encryption and decryption logic.

In one embodiment, the encryption and decryption logic utilises a session key exchanged with the user. By exchanging a session key with the user, only the user and the trusted domain controller are able to decrypt or encrypt data transmitted between the secure data processing apparatus and the user. It will be appreciated that the establishment of such key should not rely on any trusted piece of software and the behaviour of the trusted domain controller should not be alterable or reconfigurable except for the reconfiguration of the session key.

In one embodiment, the users confidentially send to the trusted domain controller the session key, by which the trusted domain controller reconfigures itself by hardware mechanisms.

In one embodiment, such confidential send operation happens remotely by imprinting the trusted domain controller from the fabric with a private cryptographic key corresponding to a pubilc cryptographic key that is published, certified and/or revoked by a certification authority that is trusted by the user.

In one embodiment, the users use the public key to encrypt a message containing the session key to be reconfigured in the trusted domain controller.

In one embodiment, the trusted domain controller, on receipt of the encrypted message, decrypts it using the imprinted private cryptographic key, and reconfigures the trusted domain controller with the decrypted session-key provided by the user.

In one embodiment, the trusted data processing apparatus comprises at least one core and cache memory. Accordingly, the trusted domain may provide part of a complete data processing apparatus and may, for example, be a subset part of a particular processor.

In one embodiment, the incoming user data comprises data and executable code. Accordingly, both executable code and data may be transmitted between the user and the secure data processing apparatus. This enables the user to utilize the resources of the secure data processing apparatus to perform data processing tasks on the user's behalf.

In one embodiment, the trusted data processor is operable to process unencrypted data by executing unencrypted executable code. Accordingly, the trusted processor may operate normally by performing data processing on unencrypted code and data. It will be appreciated that this enables the trusted data processor to function to its normal maximum performance levels.

In one embodiment, the trusted domain controller is operable, in response to a request to reconfigure the trusted domain, to delete user data within the trusted domain. Accordingly, whenever a reconfiguration of the trusted domain is to occur, the content of the trusted domain is cleared or flushed. That trusted domain flushing may, of course, include the flushing or clearing of data within the data store associated with that trusted domain.

In one embodiment, the trusted domain controller is operable to delete user data within the trusted domain prior to reconfiguring the trusted domain. Accordingly, information within the trusted domain is deleted prior to the domain being reconfigured to be used by another user or by another user session.

In one embodiment, the trusted domain controller comprises non-reprogrammable reset hardware operable to provide a hardware-controlled reset of the trusted domain in response to the request to reconfigure the trusted domain. Accordingly, the reset function may be hardwired into hardware in order to prevent any malicious software manipulation which may otherwise prevent such a clearing or flushing of the contents within the trusted domain from occurring.

In one embodiment, the request to reconfigure the trusted domain comprises a change in the session key.

In one embodiment, the request to reconfigure the trusted domain comprises a change in the session key which disables encryption and decryption.

A second aspect provides a method of securely processing user data, the method comprising: processing incoming user data received over a trusted bus and generating outgoing user data; coupling the trusted bus with an untrusted bus of an untrusted domain, using a trusted domain controller to ensure that encrypted incoming user data received over the untrusted bus is decrypted and provided over the trusted bus as the incoming user data and to ensure that outgoing user data is encrypted and provided over the untrusted bus as encrypted outgoing data; coupling the trusted domain controller and the trusted data processing apparatus with a memory bus of a data store using a data store access controller to restrict successful requests to use the data store received from the trusted domain controller and the trusted data processing apparatus to those addressed to a trusted region of the data store.

In one embodiment, the data store access controller restricts successful requests to use the data store received from the trusted domain controller and the trusted data processing apparatus to those addressed to a trusted region or public region of the data store.

In one embodiment, the data store access controller is arranged to provide a sole interface between the data store and the trusted domain controller and the trusted data processing apparatus.

In one embodiment, the data store access controller comprises hardware operable to allow or deny access to addresses within the data store in accordance with programmed rules.

In one embodiment, the secure data processing apparatus is configured to provide a plurality of trusted domains and trusted domain controllers, and the data store access controller couples each trusted domain controller and each trusted data processing apparatus with the memory bus of the data store, to restrict successful requests to use the data store received from each trusted domain controller and each trusted data processing apparatus to those addressed to a trusted region of the data store associated with each trusted domain and trusted domain controller.

In one embodiment, the method comprises reprogramming the data store access controller to allow addresses within the data store to be allocated to a trusted region associated with a trusted domain, a public region, or a restricted region associated with at least one other trusted domain.

In one embodiment, the method comprises configuring the data store access controller to support burst access cycles to the data store.

In one embodiment, the method comprises arranging the trusted domain controller to provide a sole interface between the trusted domain and the untrusted domain.

In one embodiment, the trusted domain controller is provided such that all data transfers between the trusted domain and the untrusted domain to and from a user occur through the trusted domain controller.

In one embodiment, the data transfers between the trusted domain and the untrusted domain are forcibly encrypted and decrypted by the trusted domain controller.

In one embodiment, the trusted domain controller comprises non-reprogrammable cipher hardware operable to perform encryption and decryption on the data transfers between the trusted domain and the untrusted domain.

In one embodiment, the trusted domain controller is operable to perform encryption and decryption on data transfers between the trusted domain and the untrusted domain using respective non-reprogrammable encryption and decryption logic.

In one embodiment, the encryption and decryption logic utilises a session key exchanged with the user.

In one embodiment, the users confidentially send to the trusted domain controller the session key, by which the trusted domain controller reconfigures itself by hardware mechanisms.

In one embodiment, such confidential send operation happens remotely by imprinting the trusted domain controller from the fabric with a private cryptographic key corresponding to a public cryptographic key that is published, certified and/or revoked by a certification authority that is trusted by the user.

In one embodiment, the users use the public key to encrypt a message containing the session key to be reconfigured in the trusted domain controller.

In one embodiment, the trusted domain controller, on receipt of the encrypted message, decrypts it using the imprinted private cryptographic key, and reconfigures the trusted domain controller with the decrypted session-key provided by the user.

In one embodiment, the trusted data processing apparatus comprises at least one core and cache memory.

In one embodiment, the incoming user data comprises data and executable code.

In one embodiment, the trusted data processor is operable to process unencrypted data by executing unencrypted executable code.

In one embodiment, the trusted domain controller is operable, in response to a request to reconfigure the trusted domain, to delete user data within the trusted domain.

In one embodiment, the trusted domain controller is operable to delete user data within the trusted domain prior to reconfiguring the trusted domain.

In one embodiment, the trusted domain controller comprises non-reprogrammable reset hardware operable to provide a hardware-controlled reset of the trusted domain in response to the request to reconfigure the trusted domain.

In one embodiment, the request to reconfigure the trusted domain comprises a change in the session key.

In one embodiment, the request to reconfigure the trusted domain comprises a change in the session key which disables encryption and decryption.

Further particular and preferred aspects are set out in the accompanying independent and dependent claims. Features of the dependent claims may be combined with the features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further with reference to the drawings, in which:
Figure 1 illustrates schematically an example of a firewalled domain of execution;
Figure 2 illustrates schematically an overview of a domain address firewall component according to one embodiment; and
Figure 3 illustrates schematically internal detail of a domain address firewall according to one embodiment.

### DESCRIPTION OF THE EMBODIMENTS

### Overview

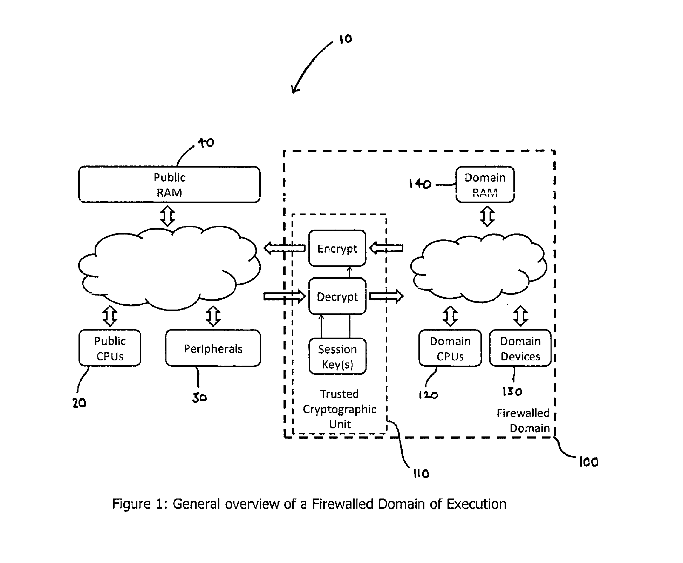

Figure 1 illustrates generally an implementation of a firewalled domain of execution 100 within a system 10. The system shown in Figure 1 comprises a firewalled domain of execution 100, public processing units 20, public peripherals 30, and public RAM 40. The firewalled domain of execution (FDE) 100 comprises a trusted cryptographic unit (TCU) 110 operable to encrypt and decrypt data exiting and entering the FDE 100. The FDE further comprises domain processing units 120, domain devices and peripherals 130 and domain RAM 140.

In the following any CPU, peripheral, DMA controller or general initiator operable to issue RAM access requests on a Memory Access Bus is referred to as a "master". Masters inside an FDE 100 are referred to as "domain masters", whilst masters residing outside an FDE domain are referred to as "public masters".

FDE 100 is characterized by a number of devices 130, including masters such as processors 120 (and DMA channels) and a memory space 140, specified in terms of physical memory addresses. The memory spaces configured for different FDEs within a system 10 are guaranteed by hardware to be disjoint. Separation of memory spaces 140 associated with different FDEs can be physical, that is to say, reside in different physical memory chips, or logical.

An FDE 100 within a system 10 is allowed normal access only to its own memory space 140. Only the Trusted Cryptographic Unit (TCU) 110 within an FDE 100 is allowed access to public memory space 40, in other words, the memory not associated with FDE 100.

A trusted cryptographic unit 110 is allowed to write to the public memory space 40, but the TCU is operable to forcibly encrypt any data that is output from within the FDE 100. Therefore, any data flow from within a firewalled domain of execution towards public memory space 40 is guaranteed to be forcibly encrypted. From the public memory space 40, data can be routed to a remote user, to persistent storage devices, or to other firewalled domains of execution within system 10.

The trusted cryptographic unit 110 of firewalled domain of execution 100 is operable to read data from public memory 40 and "copy" it to within the private domain memory space 140 associated with FDE 100. In the case that the copied data is encrypted, for use within the FDE 100, the TCU 110 is able to decrypt the data as part of the copy process.

Aspects described herein provide a mechanism for realizing a firewalled domain of execution using Commercial Off-The-Shelf (COTS) hardware, thus allowing for a cost effective realization of a FDE mechanism by reusing existing hardware chips such as processors, but also DMA controllers and others.

Aspects recognize that that the FDE abstract mechanism illustrated schematically by Figure 1 may be implemented on multi-processor computers by re-using unmodified hardware components, for example, processors and memory. In particular, aspects and embodiments recognize that by constraining memory that can be accessed by each device operable to generate access cycles to the main RAM memory a firewalled domain of execution can be implemented within a system. According to some embodiments, the constraint is realized by interposing a special component, referred to as an "address firewall" between each hardware element able to access the main RAM memory and the memory bus.

As a result, firewalled domains of execution can be realized by plugging commercial off the shelf chips onto a special motherboard having the functionality described in more detail below. The commercial off the shelf elements, along with portions of the main RAM memory provided on a physical machine, are logically partitioned across firewalled domain of execution environments. An address firewall hardware mechanism is operable to guarantee proper isolation and confidentiality of data and computation steps occurring within a firewalled domain of execution.

### Detailed Address Firewall Description

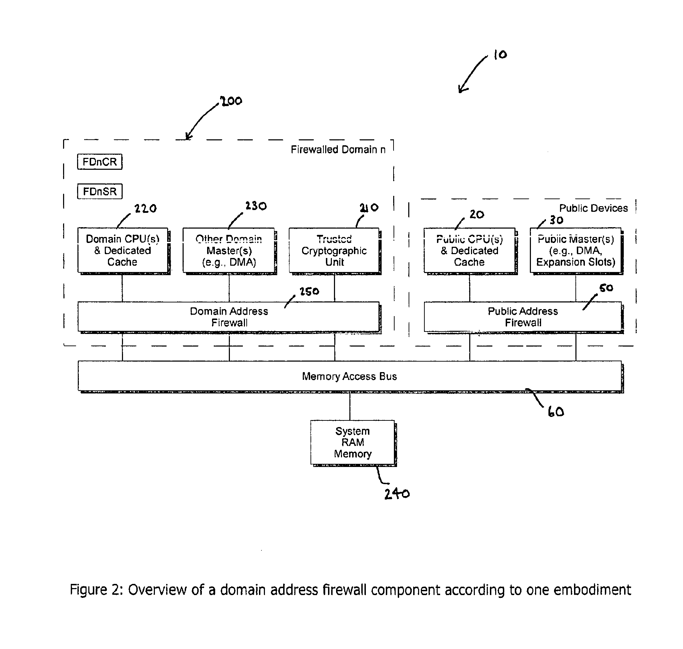

Figure 2 illustrates schematically an overview of a domain address firewall component according to one embodiment. In the system 10 illustrated in Figure 2, multiple firewalled domains of execution 200 may be implemented. Each firewalled domain of execution 200 comprises a trusted cryptographic unit 210, a domain CPU(s) and dedicated cache 220 and other domain masters 230. The system further comprises public CPU(s) with associated dedicated caches 20 and public masters 30.

It will be appreciated that it is possible, as shown in Figure 2, to implement multiple firewalled domains of execution 200 within the same physical system 10. Such a scenario may occur if, for example, a cloud provider wishes to provide a large number of independent firewalled domains of execution to customers.

In one implementation of such a system, multiple firewalled domains of execution 200 provided on the same physical system may be individually enabled or disabled thereby enhancing system flexibility. In such implementations a firewalled domain of execution would be associated with a private memory space only whilst enabled. It will be understood that when a firewalled domain of execution is disabled, associated resources (masters and RAM) are reset to a known state and released to form part of the public untrusted resources of the system. According to some embodiments, if memory space associated with a firewalled domain of execution can be programmatically changed, then such changes may only be made when the firewalled domain of execution is disabled.

Aspects and embodiments described herein are illustrated schematically by Figure 2. According to aspects and embodiments, all masters in system 10 are forbidden to perform unauthorized memory accesses by an address firewall 50, 250. Each address firewall 50, 250 is operable to limit master capability when addressing available physical system RAM 240. An address firewall 50, 250 is interposed between any master in the system 10, both those residing inside firewalled domains of execution and those public devices residing outside any firewalled domain of execution, and a memory access bus 60. The memory access bus 60 is operable to provide access to the main RAM memory 240 of system 10.

Each address firewall is operable to intercept any attempt by a master within system 10 to access the system RAM memory 240. If the memory access attempt is made by a master determined to be within a firewalled domain of execution, then access is allowed by the address firewall only if the target memory address is determined to "belong" to the same firewalled domain of execution, or if it represents a public memory address. That access attempt will, of course, be routed via the trusted cryptographic unit 210 associated with the firewalled domain of execution. It will be understood that the address firewall 250, 50 will not allow an access attempt by a master within the system if that attempt is to a memory address belonging to any other firewalled domain of execution implemented within system 10.

Whenever firewalled domains of execution within a system are enabled or disabled and the associated memory space is dynamically reconfigured, it will be appreciated that the behavior of all address firewalls within a system 10 is also required to be reconfigured. That reconfiguration of address firewalls must occur synchronously with each firewall domain of execution reconfiguration. That is to say, the address firewalls must remain aware of whether a firewalled domain of execution is enabled or not and be aware of configured memory space associated with a firewalled domain of execution. In practice the dynamic reconfiguration of firewalled domains of execution may not occur very frequently.

Some system architectures support burst access cycles to the main RAM memory, in which multiple consecutive memory addresses are accessed without repeating the target address on the bus at every access. Such an access cycle is, for example, useful for cache memories and DMA controllers. In such scenarios an address firewall is operable to restrict access in respect of access requests comprising such multiple consecutive memory addresses without repeating the target address on the bus at every access in accordance with rules associated with system RAM memory 240 in view of enabled firewalled domains of execution.

### Address Firewall Functionality

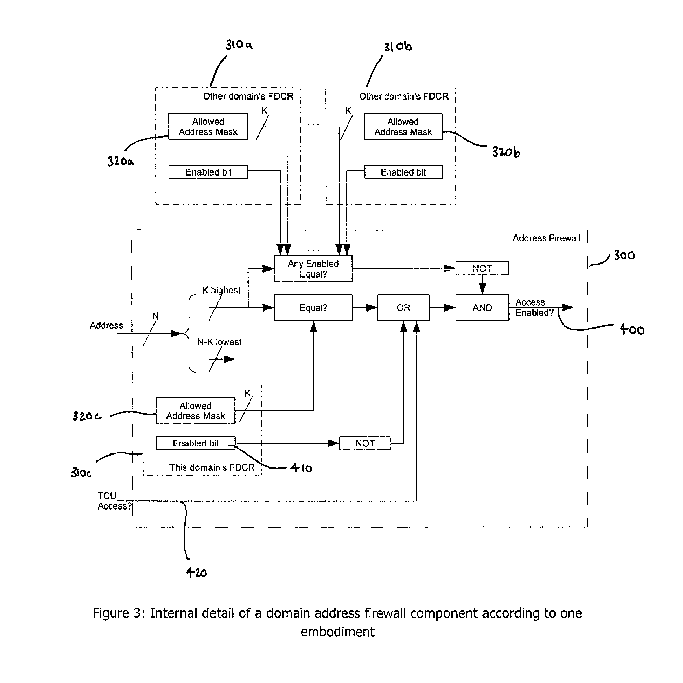

Figure 3 illustrates schematically internal detail of a domain address firewall according to one embodiment. Figure 3 shows part of the internal logical functionality of a domain address firewall block. The implementation illustrated reflects a general system in which multiple firewalled domains of execution can be implemented within the same system and those firewalled domains of execution can be individually enabled or disabled. The memory spaces associated with each firewalled domain of execution can be dynamically configured through proper registers. In the illustrated implementation masters belonging to a disabled firewalled domain of execution can be used for computations made by a public "untrusted" part of a system.

Each firewalled domain of execution provided with a system includes a Firewalled Domain Control Register (FDCR) 310a, 310b, 310c and a Firewalled Domain Status Register (FDSR). In Figure 2 they are labelled FDnCR and FDnSR since they refer to a generic firewalled domain of execution n.

The FDCR 310a, 310b, 310c is operable to control configuration of the firewalled domain of execution. That is to say, the control register is operable to control whether a domain is enabled and to control the address space associated with the domain. In the implementation illustrated in Figure 3, the "private" address space for a domain is specified in terms of a specific value of the highest K bits of the physical address belonging to the domain. Thus in the illustrated embodiment, each FDnCR register contains an address mask 320a, 320b, 320c with such K-bits value that is compared by address firewall 300 with the highest K bits of the address being accessed during a memory access cycle. If the two values are equal, then the memory cycle is trying to access a memory address belonging to the domain.

Each FDSR reports status information about a given domain, for example, whether the domain is enabled and whether errors have been detected by the address firewall 300_{;} the FDSR may also comprise counters associated with various types of possible detected errors.

The address firewall 300 is operable to intercept any attempt from a master within the system to access main memory of the system. The access attempt is allowed, logical "1" on the "Access Enabled?" Line 400, only if the target address:
- does not fall within the address range of any other enabled firewalled domain of execution on the system, as reported by their respective FDCR configuration registers 310a, 310b;
- either: the domain the address firewall belongs to is not enabled, represented by a logical "0" in the corresponding "Enabled bit" register 410; or the target address falls within the addresses range configured within the domain as reported by the domain FDCR configuration register 310c;
- or if the access is via a Trusted Cryptographic Unit associated with domain FDCR 310c, logical "1" on "TCU Access?" line 420.

The "Any Enabled Equal?" block provides as output a logical "1" if the K highest bits of the target address of the memory access is equal to the contents of any of the "Allowed Address Mask" registers of other enabled domains, i.e., with their "Enabled bit" set to "1".

When the TCU of an FDE will be accessing the main memory, the "TCU Access?" line will be "1", allowing the TCU to access also addresses outside of the private RAM of the domain, and also outside of any private RAM of any other enabled domain, that is to say, public RAM.

The check of the address belonging to the addresses range of a firewalled domain is made efficiently by comparing the most significant K bits of the memory physical address with a constant configured in the domain's FDCR register. If the machine supports N bits of physical address space, then this allows for configuring *2^{K}* different domains, each with up to *2^{(N-K)}* bytes of domain memory.

According to the scheme illustrated schematically in Figure 3, there is a need to compare the address being accessed in each memory operation with the address masks configured within all the enabled domains in the system. According to one possible embodiment, in order to avoid bottlenecks in the system, the comparison can be achieved by allowing hardware to be operable to replicate an allowed address mask associated with each enabled domain into every other domain each time such a register value is changed.

It will be appreciated that the internal logic of an address firewall not residing in any firewalled domain of execution differs from that illustrated in Figure 3. Such an address firewall is a simplified version of the scheme shown in Figure 3, and the logic of such an address firewall is operable to assume the domain of the address firewall is always disabled.

If there are changes in the content of the FDCR of a domain, the hardware logic of an address firewall (not shown) is operable, according to one embodiment to guarantee that: each firewalled domain, when being disabled (by writing a logical "o" in the "Enabled bit" within the corresponding FDCR), has associated memory content wholly reset and any CPU(s) associated with the firewalled domain has process execution suspended and reset. The hardware logic may also be operable to ensure that the FDCR of a firewalled domain of execution cannot be changed whilst the domain is disabled.

### Address Firewall Security

Address firewalls may not be operable to protect against sophisticated physical attacks to the hardware, for example, tampering by building custom-made hardware to be interposed between commercial off the shelf chips forming a system and a motherboard enriched with address firewall components as described above. Tampering with hardware may allow the owner of a physical machine to spy on activities ongoing within a firewalled domain of execution. In comparison to a System-on-a-Chip firewalled domain of execution, in which a whole chip may be manufactured in a tamper-proof way, a commercial off the shelf based firewalled domain of execution implementation as described in above provides a cheaper and more viable economic realization of firewalled domains of execution, since it allows use of commercial off the shelf hardware elements.

In cloud computing environments, the address firewalls can be coupled, according to some embodiments with a third-party certification process operable to verify periodically that the computing equipment of a cloud provider is not altered nor used in conjunction with suspicious/malicious hardware elements. According to some embodiments, TPM technology may be leveraged to ensure that only authorized commercial off the shelf hardware elements are attached to a physical system before the system can boot. Such embodiments may allow users to achieve an improved level of confidence that remote hardware has not been subject to tampering.

In comparison to a cryptographic MMU mechanism which requires an expensive cryptographic operation for each access to the main memory, an address firewall requires only simple comparisons of the K most significant bits of the physical addresses being accessed. Therefore, address firewalls can be realized with simpler, cheaper logic.

Aspects and embodiments allow users of, for example, a cloud computing service to establish some confidence that the cloud computing provider has reduced means to spy over data and/or code handed over to the cloud provider for remote processing. The improved chance of confidentiality of both data and computations performed can be underscored by well-established encryption algorithms and by hardware chips guaranteed by a chip manufacturer. Thus the use of cloud computing may be enabled across a set of domains in which security concerns may otherwise hinder the application of cloud computing methods.

The address firewalls described here provide a strong guarantee of confidentiality at a hardware level. In the case of a "break-in" by an attacker outside a system or from a virtual machine running within the system, either inside a firewalled domain of execution or outside a firewalled domain of execution, all that attacker will be able to do is see encrypted data which cannot be decrypted by the attacker due to the lack of the necessary decryption key(s).

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A secure data processing apparatus operable to securely process user data provided by a user, said secure data processing apparatus comprising:
a trusted domain comprising a trusted bus coupled with a trusted data processing apparatus operable to process incoming user data received over said trusted bus and to generate outgoing user data;
a trusted domain controller coupling said trusted bus with an untrusted bus of an untrusted domain, said trusted domain controller being operable to ensure that encrypted incoming user data received over said untrusted bus is decrypted and provided over said trusted bus as said incoming user data and to ensure that outgoing user data is encrypted and provided over said untrusted bus as encrypted outgoing data; and
a data store access controller coupling said trusted domain controller and said trusted data processing apparatus with a memory bus of a data store, said data store access controller being operable to restrict successful requests to use said data store received from said trusted domain controller and said trusted data processing apparatus to those addressed to a trusted region of said data store.

2. A secure data processing apparatus according to claim 1, wherein said data store access controller being operable to restrict successful requests to use said data store received from said trusted domain controller and said trusted data processing apparatus to those addressed to a trusted region or public region of said data store.

3. A secure data processing apparatus according to claim 1 or claim 2,
wherein said data store access controller provides a sole interface between said data store and said trusted domain controller and said trusted data processing apparatus.

4. A secure data processing apparatus according to any preceding claim,
wherein said data store access controller comprises hardware operable to allow or deny access to addresses within said data store in accordance with programmed rules.

5. A secure data processing apparatus according to any preceding claim, comprising a plurality of trusted domains and trusted domain controllers, said data store access controller being operable to couple each said trusted domain controller and each said trusted data processing apparatus with said memory bus of said data store, said data store access controller being operable to restrict successful requests to use said data store received from each trusted domain controller and each trusted data processing apparatus to those addressed to a trusted region of said data store associated with each trusted domain and trusted domain controller.

6. A secure data processing apparatus according to any preceding claim,
wherein said data store access controller is reprogrammable to allow addresses within said data store to be allocated to a trusted region associated with said trusted domain, a public region, or a restricted region associated with at least one other trusted domain.

7. A secure data processing apparatus according to any preceding claim,
wherein said data store access controller is operable to support burst access cycles to said data store.

8. A secure data processing apparatus according to any preceding claim,
wherein said trusted domain controller provides a sole interface between said trusted domain and said untrusted domain.

9. A secure data processing apparatus according to any preceding claim,
wherein all data transfers between said trusted domain and said untrusted domain occur through said trusted domain controller.

10. A secure data processing apparatus according to any preceding claim,
wherein data transfers between said trusted domain and said untrusted domain are forcibly encrypted and decrypted by said trusted domain controller.

11. A secure data processing apparatus according to any preceding claim,
wherein said trusted domain controller comprises non-reprogrammable cipher hardware operable to perform encryption and decryption on said data transfers between said trusted domain and said untrusted domain.

12. A secure data processing apparatus according to any preceding claim,
wherein said trusted domain controller is operable to perform encryption and decryption on data transfers between said trusted domain and said untrusted domain using respective non-reprogrammable encryption and decryption logic.

13. A secure data processing apparatus according to any preceding claim,
wherein said encryption and decryption logic utilises a session key exchanged with said user.

14. A secure data processing apparatus according to any preceding claim,
wherein said trusted data processing apparatus comprises at least one core and cache memory.

15. A method of securely processing user data, said method comprising :
processing incoming user data received over a trusted bus and generating outgoing user data;
coupling said trusted bus with an untrusted bus of an untrusted domain, using a trusted domain controller to ensure that encrypted incoming user data received over said untrusted bus is decrypted and provided over said trusted bus as said incoming user data and to ensure that outgoing user data is encrypted and provided over said untrusted bus as encrypted outgoing data:
coupling said trusted domain controller and said trusted data processing apparatus with a memory bus of a data store using a data store access controller to restrict successful requests to use said data store received from said trusted domain controller and said trusted data processing apparatus to those addressed to a trusted region of said data store.

## Amended claims

### Amended claims in accordance with Rule 137(2) EPC.

**1.** A secure data processing apparatus (10) operable to securely process user data provided by a user, said secure data processing apparatus comprising:
a trusted domain (100) comprising a trusted bus coupled with a trusted data processing apparatus (120) operable to process incoming user data received over said trusted bus and to generate outgoing user data;
a trusted domain controller (110) coupling said trusted bus with an untrusted bus of an untrusted domain, said trusted domain controller being operable to ensure that encrypted incoming user data received over said untrusted bus is decrypted and provided over said trusted bus as said incoming user data and to ensure that outgoing user data is encrypted and provided over said untrusted bus as encrypted outgoing data; and
a data store access controller coupling said trusted domain controller (110) and said trusted data processing apparatus (120) with a memory bus of a data store (140), said data store access controller being operable to restrict successful requests to use said data store received from said trusted domain controller (110) and said trusted data processing apparatus (120) to those addressed to a trusted region of said data store (140).

**2.** A secure data processing apparatus according to claim 1,
wherein said data store access controller provides a sole interface between said data store (140) and said trusted domain controller (110) and between said data store (140) and said trusted data processing apparatus (120).

**3.** A secure data processing apparatus according to any preceding claim,
wherein said data store access controller comprises hardware operable to allow or deny access to addresses within said data store (140) in accordance with programmed rules.

**4.** A secure data processing apparatus according to any preceding claim, comprising a plurality of trusted domains (100) and trusted domain controllers (110), said data store access controller being operable to couple each said trusted domain controller (110) and each said trusted data processing apparatus (120) with said memory bus of said data store, said data store access controller being operable to restrict successful requests to use said data store (140) received from each trusted domain controller (110) and each trusted data processing apparatus to those addressed to a trusted region of said data store (140) associated with each trusted domain and trusted domain controller.

**5.** A secure data processing apparatus according to any preceding claim,
wherein said data store access controller is reprogrammable to allow addresses within said data store (140) to be allocated to a trusted region associated with said trusted domain (100), a public region, or a restricted region associated with at least one other trusted domain (100).

**6.** A secure data processing apparatus according to any preceding claim,
wherein said data store access controller is operable to support burst access cycles to said data store (140).

**7.** A secure data processing apparatus according to any preceding claim,
wherein said trusted domain controller provides a sole interface between said trusted domain (100) and said untrusted domain.

**8.** A secure data processing apparatus according to any preceding claim,
wherein all data transfers between said trusted domain (110) and said untrusted domain occur through said trusted domain controller (110).

**9.** A secure data processing apparatus according to any preceding claim,
wherein data transfers between said trusted domain and said untrusted domain are forcibly encrypted and decrypted by said trusted domain controller.

**10.** A secure data processing apparatus according to any preceding claim,
wherein said trusted domain controller (110) comprises non-reprogrammable cipher hardware operable to perform encryption and decryption on said data transfers between said trusted domain (100) and said untrusted domain.

**11.** A secure data processing apparatus according to any preceding claim,
wherein said trusted domain controller is operable to perform encryption and decryption on data transfers between said trusted domain and said untrusted domain using respective non-reprogrammable encryption and decryption logic.

**12.** A secure data processing apparatus according to any preceding claim,
wherein said encryption and decryption logic utilises a session key exchanged with said user.

**13.** A secure data processing apparatus according to any preceding claim,
wherein said trusted data processing apparatus comprises at least one core and cache memory.

**14.** A method of securely processing user data, said method comprising:
processing incoming user data received over a trusted bus and generating outgoing user data;
coupling said trusted bus with an untrusted bus of an untrusted domain, using a trusted domain controller (110) to ensure that encrypted incoming user data received over said untrusted bus is decrypted and provided over said trusted bus as said incoming user data and to ensure that outgoing user data is encrypted and provided over said untrusted bus as encrypted outgoing data;
coupling said trusted domain controller (110) and trusted data processing apparatus (120) with a memory bus of a data store (140) using a data store access controller to restrict successful requests to use said data store (140) received from said trusted domain controller (110) and said trusted data processing apparatus to those addressed to a trusted region of said data store (140).
